(19) Europäisches Patentamt
European Patent Office
Office européen des brevets

(11) **EP 4 640 368 A1**

(12) **EUROPEAN PATENT APPLICATION**

(43) Date of publication:
**29.10.2025 Bulletin 2025/44**

(21) Application number: **25172070.2**

(22) Date of filing: **23.04.2025**

(51) International Patent Classification (IPC):
**B24B 1/04** $^{(2006.01)}$

(52) Cooperative Patent Classification (CPC):
**B24B 1/04; G05B 19/4163**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.04.2024 US 202418644934**

(71) Applicant: **RTX Corporation
Farmington, CT 06032 (US)**

(72) Inventors:
• **WANG, Zhigang
Farmington, 06032 (US)**

• **GUO, Changsheng
Farmington, 06032 (US)**
• **KUCZEK, Andrzej
Farmington, 06032 (US)**
• **FERNANDEZ, Robin
Farmington, 06032 (US)**
• **BARRON, Alan
Farmington, 06032 (US)**
• **ABDI, Ahmed
Farmington, 06032 (US)**

(74) Representative: **Dehns
10 Old Bailey
London EC4M 7NG (GB)**

(54) **PHYSICS-BASED PROCESS CONTROL METHOD AND SYSTEM**

(57) A method of machining a workpiece (23) includes receiving at least one input parameter from an ultrasonic impact grinding system (1100) having an ultrasonic vibration tool (1). The input parameter includes a material property of a workpiece (23) and a tool parameter. A physics-based model (1106) is applied to the input parameter and an estimation is made of a vibration amplitude (208) for a power level to be provided to the vibration tool (1) and a particle size (1108) for abrasive particles (24) to be used with the vibration tool (1). The power level is provided to an adaptive profile control (1150) for the tool (1).

FIG. 11

EP 4 640 368 A1

**Description**

**Field of the Invention**

The subject matter disclosed herein relates to a physics-based process control method and system for optimizing performance parameters within the system.

**Related Art**

Silicon carbide is a synthetically produced crystalline compound of silicon and carbon (SiC) which can be used to form a ceramic matrix composite (CMC) by combining a SiC matrix phase with a SiC fiber phase using various processing methods. SiC/SiC CMCs have high thermal, mechanical, and chemical stability while at the same time having a high strength to weight ratio.

The hardness of a SiC/SiC CMC is second only to that of diamond tooling. In addition, the SiC fiber reinforced phase adds anisotropy and heterogeneity material properties to the compound. Thus, it is challenging to develop a high quality, efficient and cost-effective way to machine a SiC/SiC CMC.

For Ultrasonic Impact Grinding (UIG) of CMC, the selection of the right feed rate depends on parameters, such as vibration frequency and amplitude, CMC properties and slurry. Currently, there is no available means to design and optimize the UIG process parameters. The unoptimized process results in lower productivity and higher machining cost.

Once the slurry solution is selected for a given CMC, only the vibration amplitude and feed rate can be adjusted to achieve the desired material removal.

Therefore, it is necessary to develop a machining strategy and method to meet the targeted requirement.

**Summary of The Invention**

An ultrasonic impact grinding system is disclosed. The ultrasonic impact grinding system includes an ultrasonic vibration tool having a tool tip. The ultrasonic impact grinding system also includes a slurry component having a slurry nozzle to deliver a slurry having abrasive particles in an area of the tool tip. The tool tip of the ultrasonic vibration tool engages the abrasive particles to machine a workpiece. The ultrasonic impact grinding system also includes a physics-based model configured to optimize a material removal rate for a given particle size for the abrasive particles and a vibration amplitude according to a power level for the ultrasonic vibration tool. The physics-based model receives at least one input parameter including a CMC material property and a tool parameter. The ultrasonic impact grinding system also includes an adaptive profile control having an ultrasonic power generator to receive the vibration amplitude and control the ultrasonic vibration tool according to the vibration level and a vibration frequency.

A method is disclosed. The method includes receiving at least one input parameter for an ultrasonic impact grinding system. The input parameter includes a material property of a workpiece and a tool parameter. The method also includes applying a physics-based model to the at least one input parameter. The method also includes estimating a vibration amplitude to optimize a power level to an ultrasonic vibration tool of the ultrasonic impact grinding system. The method also includes providing the power level to an adaptive profile control for the ultrasonic vibration tool.

A method is disclosed. The method includes providing an ultrasonic vibration tool for impact grinding a workpiece using a slurry having abrasive particles in an area of a tool tip of the ultrasonic vibration tool. The method also includes providing electrical power having an electrical power level to the ultrasonic vibration tool to induce vibration in the tool tip in a direction of the workpiece. The method also includes receiving an input signal corresponding to the electrical power level. The method also includes applying a physics-based model to the input signal. The method also includes determining a desired vibration amplitude of a power level of the ultrasonic vibration tool based on the input signal. The method also includes using the desired vibration amplitude to control the electrical power level to the ultrasonic vibration tool.

**Brief Description of The Figures**

Implementations of the inventive concepts disclosed herein may be better understood when consideration is given to the following detailed description thereof. Such description makes reference to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:

Figure 1 illustrates an ultrasonic vibration tool according to the disclosed embodiments.
Figure 2 illustrates a machining process implemented by the ultrasonic vibration tool according to the disclosed embodiments.

Figure 3 illustrates a weaving pattern for a CMC according to the disclosed embodiments.

Figure 4A illustrates how the relative content of fiber and matrix changes during a machining operation.

Figure 4B further illustrates how the relative content of fiber and matrix changes during a machining operation.

Figure 4C further illustrates how the relative content of fiber and matrix changes during a machining operation.

Figure 5 a graph of load signals obtained during the machining of a CMC workpiece according to the disclosed embodiments.

Figure 6 illustrates a graph of the load signals obtained during the drilling of a CMC workpiece according to the disclosed embodiments.

Figure 7 illustrates a set of comparison graphs plotting material removal rate versus grit size according to the disclosed embodiments.

Figure 8 depicts a closed loop adaptive ultrasonic system according to the disclosed embodiments.

Figure 9 a block diagram of an embodiment of a system for measuring the length of an ultrasonic tool tip according to the disclosed embodiments.

Figure 10 illustrates a block diagram of one embodiment of a control unit shown in Figure 8 according to the disclosed embodiments.

Figure 11 illustrates a block diagram of an ultrasonic impact grinding system having a physics-based model module according to the disclosed embodiments.

## Detailed Description of The Preferred Embodiments

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

As used herein, a letter following a reference numeral is intended to reference an embodiment of the feature or element that may be similar, but not necessarily identical, to a previously described element or feature bearing the same reference numeral, such as 1, 1a, or 1b. Such shorthand notations are used for purposes of convenience only, and should not be construed to limit the inventive concepts disclosed herein in any way unless expressly stated to the contrary.

Moreover, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes plural unless it is obvious that it is meant otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, and/or groups thereof.

As used herein, any reference to "one embodiment," "alternative embodiments," or "some embodiments" means that particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features that may not necessarily be expressly described or inherently present in the instant disclosure.

The inventive concepts may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts, or combinations of special purpose hardware and computer instructions.

Inventive concepts may be implemented as a computer process, a computing system or as an article of manufacture such as a computer program product of computer readable media. The computer program product may be a computer storage medium readable by a computer system and encoding computer program instructions for executing a computer process. When accessed, the instructions cause a processor to enable other components to perform the functions disclosed below.

The disclosed embodiments provide a way to select the right slurry solution and optimize the ultrasonic conditions for UIG of CMC. Firstly, the physics-based model is used to select the right baseline conditions such as the grit size of abrasive particles, vibration amplitude and feed rates. Thereafter, the force level needed for the selected tooling, slurry solution, and CMC material can be calibrated through experiments with measured loads. For a given vibration frequency, the power level in UIG provides an indication of the average force on the tool. The power data from the ultrasonic generator is utilized to adaptively adjust the feed rate to account for process variations and slurry performance degradation to maintain optimum process performance.

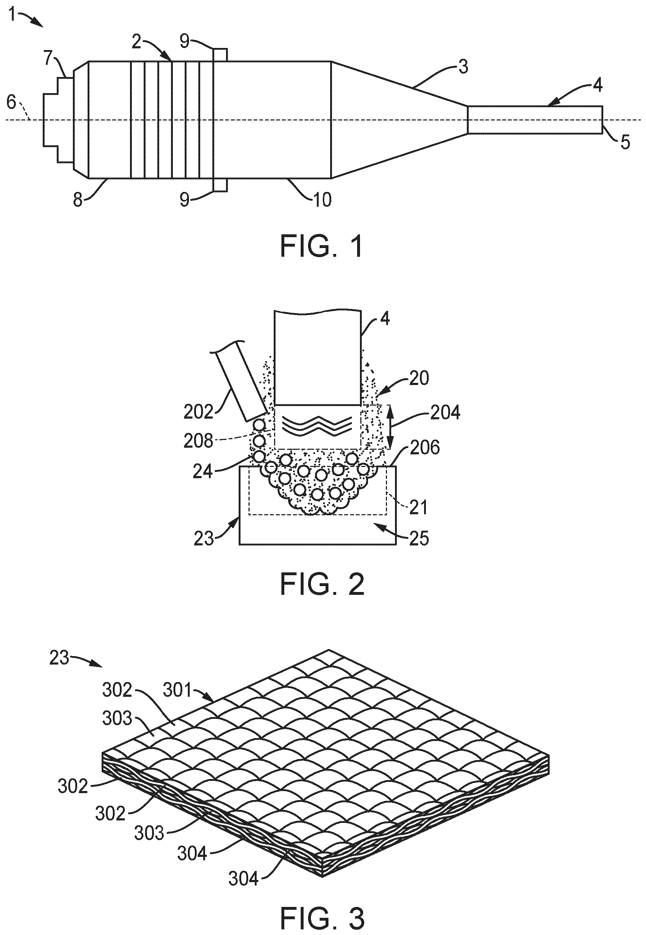

Figure 1 depicts an ultrasonic vibration tool 1 according to the disclosed embodiments. Ultrasonic vibration tool 1 includes a transducer 2, an energy-forming horn 3, an ultrasonic tool tip 4, and a tool tip edge 5. The electrical energy input to transducer 2 is converted to mechanical vibrations at a high frequency (usually at 20-40 kHz) along longitudinal axis 6 of tool 1. The excited vibration is subsequently transmitted through energy-focusing horn 3 to tool tip 4 in order to amplify the vibration amplitude which is delivered to tool tip edge 5. Tool 1 is located directly above the workpiece (not shown in Figure 1) and vibrates along its longitudinal axis 6 at a desired amplitude.

Ultrasonic vibration tool 1 is used to machine a CMC component such as to form holes, slots, and the like. Tool 1 is attached to a work fixture (not shown) using a suitable fastener 7. Tool 1 also includes back portion 8, flange 9 and front portion 10 that enhance delivery of the mechanical vibrations from tool tip 4 to horn 3. These features may be arranged in various configurations to achieve the functionality disclosed above.

Figure 2 depicts a machining process implemented by ultrasonic vibration tool 1 according to the disclosed embodiments. Tool tip 4 is vibrated toward and away from a surface 206 of workpiece 23 in a direction 204 that is perpendicular to the surface of the workpiece. Workpiece 23 may be a substrate that is part of the CMC component. An abrasive slurry 20 is constantly fed into machining area 21 by slurry source 202. Slurry 20 contains abrasive particles 24, made of abrasive material, such as diamond, boron carbide, and the like, that is suspended in water or oil. Slurry 20 also flushes away debris from machining area 21.

The vibration of tool tip 4 causes abrasive particles 24 contained in slurry 20 located between the tool tip and workpiece 23 to impact surface 206, thereby the removal of material by microchipping as generally indicated by reference number 25 in Figure 2. Because the actual machining is carried out by abrasive particles 24, tool tip 4 can be softer than the workpiece 23. Thus, the UIG process can be treated as a micro scale material fracture process using abrasive particles 24 as the cutting edges.

The fracture toughness of a SiC matrix is remarkably increased by its fiber reinforcement. However, the removal process of fibers does not always occur simultaneously with the SiC matrix. This condition indicates that the failure mechanisms vary substantially between machining the SiC matrix and the fibers.

The fracture mechanism of a SiC matrix is relatively uniform. Fiber fracture forms may be related to fiber orientation and density. SiC fibers are first de-bonded from the SiC matrix due to extrusion by tool 1. One or more of a bending-induced fracture, a compression-induced fracture and a shear-induced fracture occur in different orientations of the SiC fibers.

Machining speed mainly depends on vibration amplitude 208, applied static pressure, abrasive concentration, and size distribution of the abrasive particles. Once the slurry solution is selected to be used, primarily only vibration amplitude 208 and feed rate can be adjusted to achieve the desired material removal. Vibration amplitude 208 refers to the peak-to-peak amplitude at tool edge 5 of tool tip 4. Tool edge 5 vibrates in direction 204. The amplitude of this vibration, or vibration amplitude 208, varies as tool 1 operates.

Woven reinforced materials such as CMCs may include three different constituents: fibers, matrix, and porosities. Particularly in CMCs, due to the complex manufacturing method followed and especially during the stage of Chemical Vapor Infiltration (CVI), big porosities can be found within the material and therefore need to be considered to get an in-depth understanding of the machining mechanism.

Figure 3 depicts a typical microstructure of a workpiece 23 comprised of CMC material 301 having fiber tows 302 and 303 which are formed of CMC fiber, and are interwoven. Workpiece 23 may be an intermediate product being machined to form a component, such as a blade outer air seal, a static vane, a turbine blade, other components for gas turbine engines, and other components for other applications. CMC material 301 also includes a CMC matrix such as shown at 304, as well as pores or voids in the matrix.

Accordingly, CVI CMC structure can be characterized by the fiber-rich region, matrix-rich region and porosities, and their relative content can be expressed as:

$$C_{CMC} = C_{fiber} + C_{matrix} + C_{porosity} = 1 \quad (1)$$

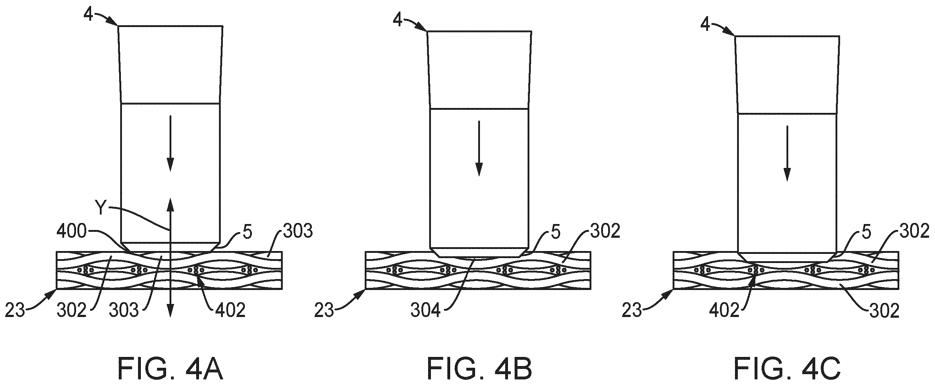

Figures 4A-C depicts how the relative content of fiber ($\lambda$) and matrix ($v$) changes along the hole and depending on where a hole 400 is machined within the CMC workpiece. Referring to Figure 4A, as workpiece 23 is being machined, tool tip 4 and tool tip edge 5 may initially encounter tow 303. One can appreciate that the relative content of tows 302 and 303 (fibers) as well as the matrix and porosity is changing along hole axis Y. It also may vary depending on where hole 400 is machined. More than one hole may be machined into workpiece 23. Thus, variation may be encountered between the content of workpiece 23 at the distinct area. For example, directly to the left of hole axis Y, the respective materials of workpiece 23 would differ in order.

Referring to Figure 4B, tool tip 4 encounters a tow 302, with a slight bit of matrix 304 having porosity. As may be appreciated, tool tip edge 5 moves further along hole axis Y. This further movement along hole axis Y may result in a greater vibration amplitude 208 for tool tip 4. Referring to Figure 4C, a subsequent step shows where tool tip 4 is machined through tow 302 and is again encountering matrix 304 having porosity at area 402. In a subsequent step, tool tip 4 will have moved through area 402 of matrix 304 with porosities and will again encounter a portion of tow 302. These steps also result in further movement of tool tip edge 5 along hole axis Y, which may result in an increased vibration amplitude 208 for tool tip 4.

As depicted in Figures 4A-C, the relative content of fiber, matrix and porosity is changing along hole axis Y, and it also varies depending on where the hole is machined. Therefore, two stochastic variables are defined to describe the structure of the material; the relative content of fiber is defined as $\lambda$ while the relative content of matrix as $v$. Hence, the total relative content of material at a specific instant of the drilling process ($t$) or drilling depth ($d$) for a certain size of a tool ($s$) can be defined as:

$$C_{CMC}(s, t) = C_{fiber} + C_{matrix} + C_{porosity} = \lambda + v + (1 - \lambda - v) \quad (2)$$

One may appreciate that, depending on how the material is distributed along the drilling path, tool 1 might encounter different resultant axial loads. Due to the stochastic nature of $\lambda$ and $v$, a probabilistic approach defining how the resultant cutting load tends to fluctuate depending on the cutting depth ($d$), can offer an understanding of how the heterogeneous material property affects the level of dynamics of the system.

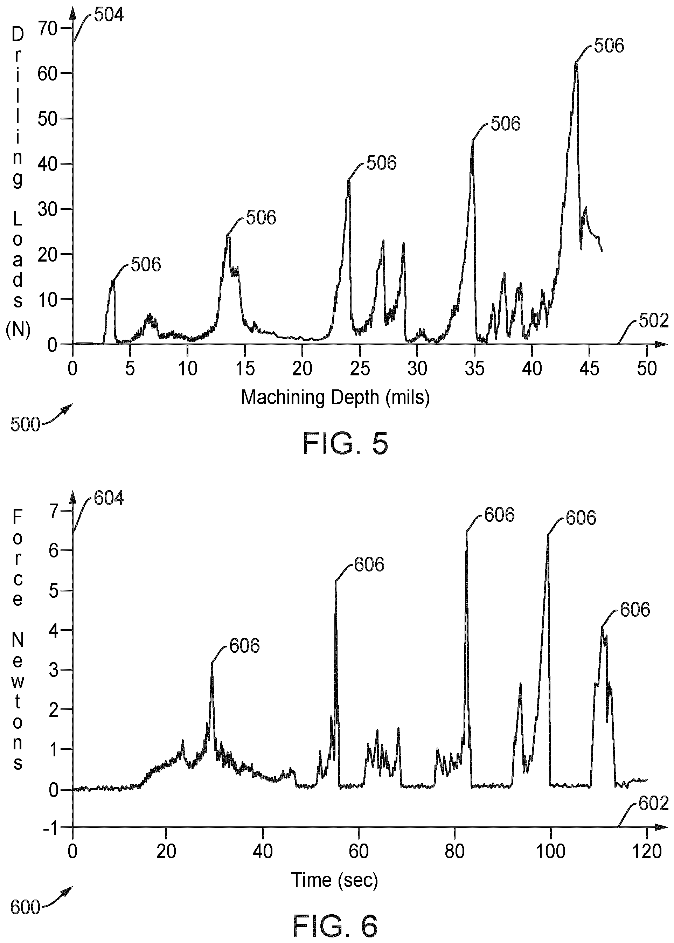

Figure 5 depicts a graph 500 of measured machining loads of CMCs, which have different magnitude due to the heterogeneous nature. This is due to the different material constituents (fibers, matrix and porosities), which are in contact with the tool tip at each instant of the machining process. Graph 500 includes axis 502, which provides values for the machining depth of tool 1 in mils. Graph 500 also includes axis 504, which provides values for drilling loads in Newtons. As shown in Figure 5, after every 9 - 11 mils, one or more peak loads 506 may be observed, which correlates to the depth of each tow/ply, and the pattern is repeatable. From machining perspective, the fluctuated loads are not desirable for creating precision features and can cause overloading of tooling for some cases. Thus, it is desirable to perform adaptive control of axial loads to improve process efficiency.

Without a precise follow-up control of frequency and amplitude of the electric signal feeding the ultrasonic stack, the output power of a power supply for tool 1 will fluctuate strongly during machining process resulting in undesired quality of the process. In the UIG process, the average power P can be estimated with the following equation:

$$P = F \times V \approx F \times f \times A$$

$F$ - Average load applied in the cutting zone (N)
$V$ - Velocity of down speed (m/s)
$f$ - Vibration frequency (kHz)
$A$ - Vibration amplitude (m) as shown by vibration amplitude 208 in Figure 2.

The disclosed embodiments implement a physics-based model configured to estimate a particle size for abrasive particles 24 of slurry 20. It also may be used to estimate vibration amplitude 208 for tool 1. The physics-based model does this processing according to a power level for tool 1. The physics-based model may receive at least one input parameter including a material property of workpiece 23 and a tool parameter.

According to the disclosed embodiments, parameters in UIG grinding of CMC may include the following:

Parameters for ultrasonic vibration may include

a. Vibration frequency; and
b. Horn design to maximize gain and energy transfer.

The amplitude of the vibration corresponds to half the mean grain size. Higher values of amplitude results in incomplete grit replenishment, whereas lower amplitude values resulted in inefficient energy transfer.

Parameters of the slurry system may include

a. Abrasive particles: Hard ceramics (i.e. Diamond, Boron Carbide, etc.)

b. Abrasive Particle Size: 10.0 um - 50.0 um

c. Rate: 0.5 - 5.0 L/min.

d. Concentration: 20~50 Wt% Abrasive

Parameters for material properties may include

a. CMC material properties
b. Tooling design and material selection
c. Tool wear

It is difficult to select optimal process parameters for a complex process with so many factors involved.

An analytical model of material removal rate (MRR) or penetration rate in UIG grinding of CMC can be expressed as:

$$MRR = c_3 \left( \frac{Sk_5^2}{6} \right) R \rho^{0.8} f^{1.6} Y^{1.6} \qquad [3]$$

Where:

$C_3$ - Gap coefficient (20 - 35%)
S - Total area of machining zone (mm^2)
$k_5$ - Property coefficient
R - Radius of abrasive particles (mm)
$\rho$ - Density of work material (kg/mm^3)
f - Vibration frequency (kHz)
Y - Vibration amplitude (mm), shown as vibration amplitude 208 above

Dominant parameters values include

a. Gap coefficient and particle size
b. Vibration frequency and amplitude

The disclosed analytic model provides baseline guidance to select particle size and vibration amplitude. When the average grit size approaches the dimension of the gap between tool tip 1 and workpiece 23, some particles with larger diameters will exceed the size of the gap and, therefore, cannot get into the machining zone to participate in the machining process. The condition reduces the number of active abrasive particles 24 in action. This feature may be related to the gap coefficient $C_3$, disclosed above.

As disclosed above, ultrasonic impact grinding power P can be expressed as follows:

$$P = F \times V \approx F \times f \times A$$

Where:

F - Static load applied in the cutting zone (N)
V - Velocity of down speed (m/s)
f - Vibration frequency (kHz)
A - Vibration amplitude (m)

Dominant process parameters:

$$F = 1 \sim 10 \text{ N}$$

f = 20 kHz,
A = 20 ~ 100 μm
V = 0.4 ~ 2.0 m/s
P = 4.0 ~ 20.0 W

In addition to the CMC materials and the distribution of SiC fibers, the average load also depends on the feed rate along the machining direction, or hole axis Y. Figure 6 depicts graph 600 having axis 602 providing values for time in seconds and axis 604 providing values for force in Newtons. When the feed rates are less than the material removal along the machining direction, the average load tends to be small and stable other than a few peak loads 606 that occur where the area has higher ratio of SiC fibers as shown in graph 600.

On the other hand, if the feed rates are higher than the material removal, the cutting load increases quickly, and sometimes it can cause tool breakage and deflection if the applied load is over its yield strength. Thereafter, it may be desired to monitor and control the power output to avoid overloading the tool.

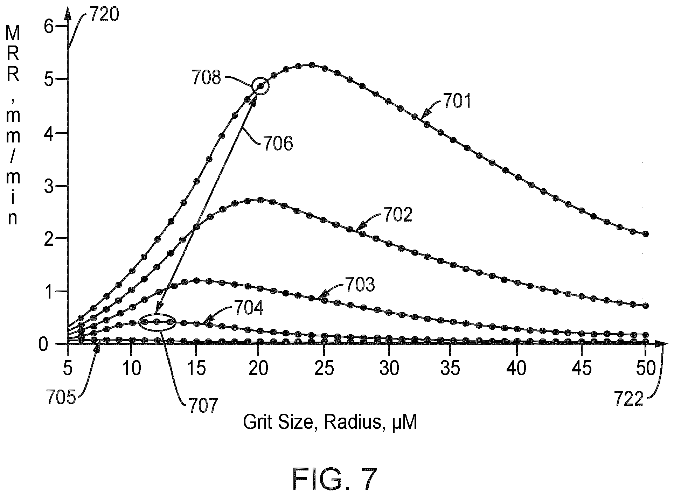

Figure 7 depicts a set of set of comparison graphs plotting the material removal rate (MRR) sum in mm/min along axis 720 versus grit size radius in μm along axis 722. MRR is plotted along the y-axis in millimeters per minute and grit size is plotted along the x-axis.

Each plot is generated when the peak-to-peak amplitude of tool tip 4 in Figure 1 is at:

Plot 701 60 μm (microns);
Plot 702 50 μm (microns);
Plot 703 40 μm (microns);
Plot 704 30 μm (microns);
Plot 705 20 μm (microns);

Point 707 on plot 704 results from using a baseline tooling design with a pencil-type tool with a gain of 2x and a diamond slurry of up to 5 percent concentration ratio. Point 708 on plot 701 results from an optimized tooling design with a gain of 7x and a diamond slurry of up to 20 percent concentration ratio. Line 706 illustrates a 12x improvement from point 707 to point 708.

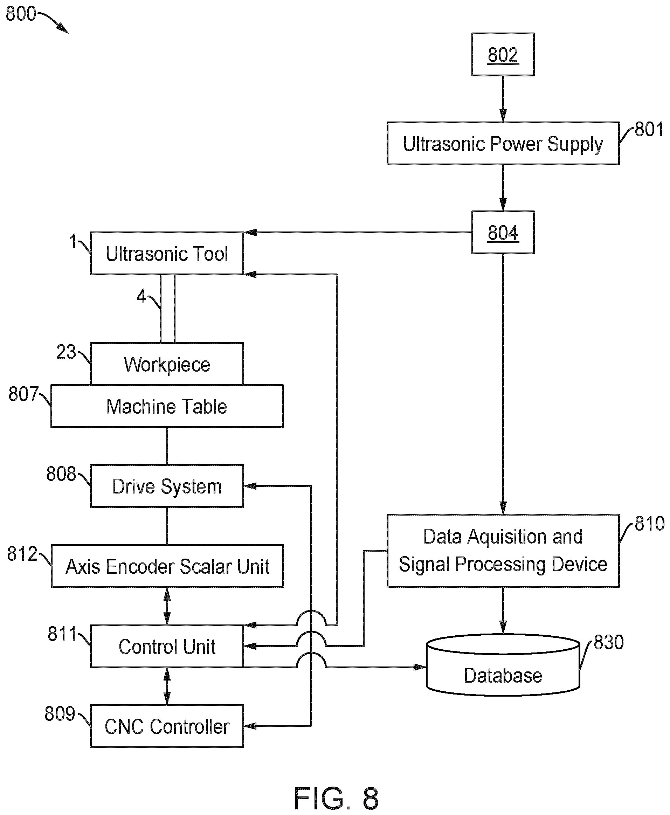

Figure 8 depicts a closed loop adaptive ultrasonic system 800 according to the disclosed embodiments. The system includes an ultrasonic power supply 801, which receives incoming electrical power at power terminal 802. Power supply 801 supplies electrical power to ultrasonic vibration tool 1 via power terminal 804. Tool 1 includes tool tip 4, which is used to perform a machining operation on workpiece 23. Workpiece 23 is mounted on machine table 807, which in turn is driven in x-y-z directions by drive system 808 under the control of CNC controller 809. Ultrasonic power supply 801 may also supply electrical power to drive system 808 and CNC controller 809, or theses elements can be powered from other sources.

When tool 1 is fixed in a stationary position, drive system 808 can position workpiece 23 under tool tip 4 as needed in order to carry out the machining operation under the control of CNC controller 809. Alternatively, workpiece 23 can remain stationery and tool 1 can be carried by its own drive system similar to drive system 808 also under control of a CNC controller, similar to CNC controller 809.

The power output from ultrasonic power supply 801 is captured during the machining operation by data acquisition device and signal processing device 810. In particular, voltages and currents are captured for processing by control unit 811, as disclosed below.

After appropriate filtering to remove unwanted artifacts, if necessary, the data signal from device 810 is suppled to control unit 811. Control unit 811 also controls the operation of CNC controller 809. The data signal is used by control unit 811 to control the operation of CNC controller 809 to, in turn, control the feed rates of drive system 808 to maintain desired loads on tool 1. Speed and position data from axis encoder scalar unit 812 is also supplied in real time to control unit 811.

Based on all of this data, control unit 811 can determine the motion and rate of motion along the machining axis of tool 1 required in order to achieve the desired and most efficient machining process. This feature allows control unit 811 to CNC controller 809, accordingly. Control unit 811 can also control the operation of tool 1, e.g., turning the tool on and off, controlling various operating parameters, and turning slurry source 202 on and off.

Database 830 is included in system 800. During the disclosed processes, all process data, including machining conditions, reference and actual load as well as amplitude profiles are stored in database 830. The data may be saved for analysis. If the targeted process performance is achieved to meet the quality inspection requirements of parts subject to ultrasonic machining by tool 1, then the reference process signature and the measured signature may be fused as an adjusted baseline signature. The adjusted baseline signature may be saved to database 830. In machining subsequent CMC parts, the adjusted baseline signature may be used for process monitoring and control by following the same processes used to machine the previous workpieces.

This iterative process may be repeated until all parts are machined. Over time, with physics-guided machine learning, a reliable historical dataset may be built as an up-to-date representation of the physical operation of system 100. Thus, a process profile with high fidelity may be built, which can be used to evaluate the current condition. It also may be used to predict future behavior, refine the control of tool 1, and optimize operations within system 100.

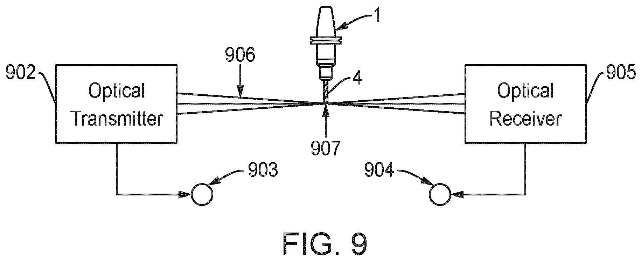

Figure 9 depicts one embodiment of a measuring device for measuring the length of tool tip 4. Tool tip 4 will wear during machining. Thus, it is important to periodically measure the length of tool tip 4 in order to compensate for wear and to trigger an alert when wear has become sufficient to impair the operation of the tool tip. An optical transmitter 902, which can be a laser diode, transmits a light beam 906 to optical receiver 905 with its focal point 907 at the end of tool tip 4. Optical transmitter 903 and optical receiver 905 are coupled to control unit 811 via respective nodes 903 and 904.

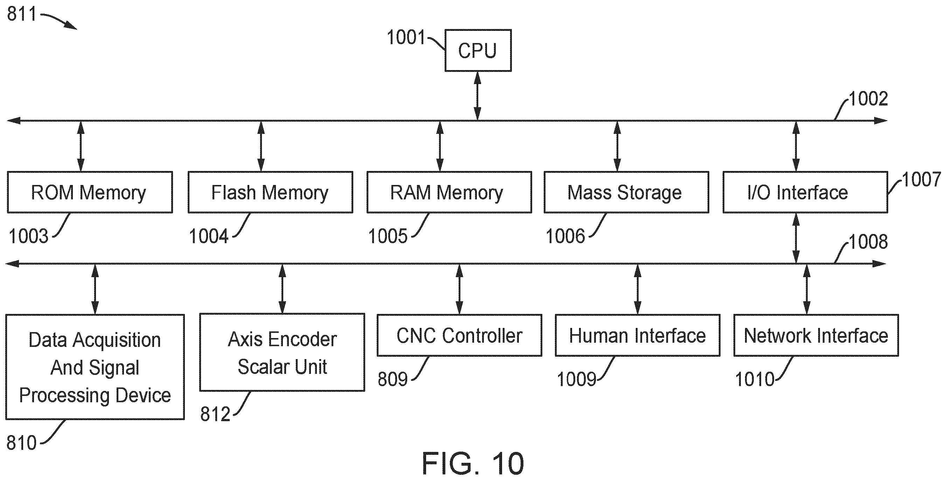

Figure 10 depicts a block diagram of a one embodiment of control unit 811 shown in Figure 8 according to the disclosed embodiments. Control unit 811 includes central processing unit (CPU) 1001, which is used to execute computer software instructions. CPU 1001 is coupled, via bus 1002, to ROM memory 1003, flash memory 1004, RAM memory 1005, mass storage 1006 and I/O interface 1007.

ROM memory 1003 and flash memory 1004 may be used to store computer software instructions for execution by CPU 1001. RAM memory 1005 may also be used for storing computer software instructions, and especially for storing information that is only needed for a short period of time. Mass storage 1006 is used for longer and larger data storage needs as may be required to be retain for data analysis over time.

I/O interface 1007 allows the control unit to communicate via bus 1008 to other parts of the system, such as data acquisition and signal processing device 810, axis encoder scalar unit 812, and CNC controller 809, all shown in Figure 7. Also coupled to control unit 811 may be human interface device 1009, which allows an operator of the system to input control commands to the system via switches, knobs, keyboards and the like and to receiver information from the system via lights, displays, audio devices and the like.

A network interface 1010 may also be provided that allows control unit 811 to communicate with Internet hosted services such as Cloud Storage Units web applications and the like that consume data provided via control unit 811 for analysis and subsequent retrieval.

The functionality shown in Figure 10 may also be integrated into CNC controller 809.

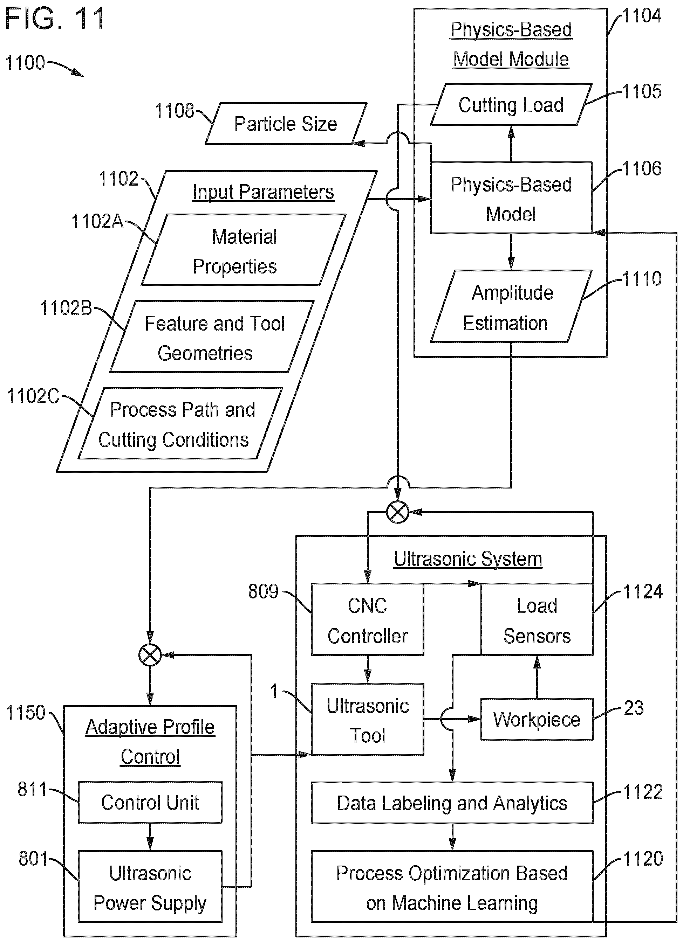

Figure 11 depicts a block diagram of an ultrasonic impact grinding system 1100 having a physics-based model module 1104 according to the disclosed embodiments. Input parameters 1102 may be provided to physics-based model 1106 of physics-based model module 1104. Input parameters 1102 may relate to the process parameters disclosed above. For example, input parameters 1102 includes material properties 1102A. Material properties 1102A may include CMC fiber, matrix pores and their distribution, and the like. Input parameters 1102 also include feature and tool geometries 1102B and process path and cutting conditions 1102C. A process path may be related to features to be machined, and cutting conditions include vibration amplitude, feed rates, and the like. Input parameters 1102, through parameters 1102A, 1102B, and 1102C, may provide a material property, such as a density of the work material for workpiece 23 in system 800. Input parameters 1102 also may provide a tool parameter, such as frequency vibration.

Physics-based model 1106 receives input parameters 1102 and estimates particle size 1108 and vibration amplitude 208 as amplitude estimation 1110. Referring to the analytical model disclosed by Equation 3 above, physics-based model 1106 utilizes the relationships disclosed by the analytical model to provide baseline guidance to select particle size 1108 and vibration amplitude 208 to optimize the material removal rate.

Amplitude estimation 1110 is provided to control unit 811 of adaptive profile control 1150. Control unit 811 also may receive power and vibration amplitude for output power captured from ultrasonic power supply 801 to modify or set power levels to ultrasonic tool 1.

Physics-based model 1106 also may determine cutting, or machining, load 1105 to provide to CNC controller 809. CNC controller 809 may control tool 1 to operate at cutting load 1105. Load sensors 1124 may detect the load used to machine workpiece 23 by tool 1. A load profile may be generated and provided back to CNC controller 809. The average load may depend on the feed rate in the machining direction. When the feed rate is less than the material removal along the machining direction, the average load tends to be small and stable other than fewer peak loads occurring where the area has a higher ration of SiC fibers.

Alternatively, if the feed rates are higher than the material removal, the machining load increases quickly and sometimes can cause tool breakage and deflection. The disclosed embodiments seek, using physics-based model 1106, a sweet spot to select higher feed rates without causing overloading. Thus, even with a higher vibration amplitude 208, even at a higher feed rate, the machining process is stable.

Thus, using real time data obtained during machining, it is possible to perform closed-loop process control of UIG to achieve targeted machining performance without any additional sensors. Also, the ultrasonic power supply connected to CNC controller 809 adaptively provides the targeted power to ultrasonic tooling to achieve desired vibration amplitude.

This estimated amplitude will then be used as a reference for adaptive process control by adaptive profile control 1150. During actual drilling process, the power signals are used to control the tool speed to maintain the prescribed loads as mentioned above.

Without any additional sensors, the feed rates are adjusted proportionally to the ultrasonic power consumption, sometimes it could significantly reduce feed rates when high loads occurred to avoid severe tool wear and undesirable conditions. So, the disclosed process provides features to adaptive control the vibration amplitude by increasing power to the ultrasonic system to overcome higher fracture toughness for areas with high concentration ratio of fiber tows. If the actual feed rate is within a reasonable range, the process continues until the end of the program. On the other hand, if the feed rate is out of the normal range even with higher vibration amplitude, the on-machine tool measurement is then used to check tool length and diameter.

The difference between the tool penetration depth and tool wear is the actual machining rate. If the observed machining rate is significantly less than the desired one, it needs to either replace the tooling or flush used slurry out of machining area. Moreover, when the cutter is not engaged in cutting, the ultrasonic power supply can be turned off to save energy. With the encoder signals from the CNC controller, the tool position is known, so the tool could also slow down during the breakthrough of holes to avoid edge chipping using the look-ahead function embedded in CNC controller.

Thus, using physics-based model 1106, the baseline process parameters, such as slurry solution/particle size 1108, amplitude estimation 1110, and cutting load 1105 may be selected to achieve targeted machining speed. With all the data from prediction and actual measurement, the disclosed process may be improved via process optimization based on machine learning 1120 and data labeling and analytics 1122. Using the disclosed embodiments, high-performance drilling of deep holes on CMC materials using UIG may be achieved.

During the process, all process data, including machining conditions, reference and actual load and amplitude profile are saved and analyzed. If targeted process performance is achieved to meet the quality inspection requirement of parts, the reference process signature and measured one will be fused as an adjusted baseline signature, which will then be saved to the historical database. In the drilling of subsequent CMC parts, the adjusted baseline signature will be used for process monitoring and control by following the same procedure used to machine the previous parts. This iterative process will be repeated until all parts are machined. Over the time, with the physics-guided machine learning, a reliable historical dataset can be built as an up-to-date representation of the physical operation. Thus, a process profile with high fidelity is built, which can be used to evaluate the current condition and more importantly to predict future behavior, refine the control and optimize operations.

As will be appreciated by one skilled in the art, the present invention may be embodied as a system, method or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, the present invention may take the form of a computer program product embodied in any tangible medium of expression having computer-usable program code embodied in the medium.

The corresponding structures, material, acts, and equivalents of all means or steps plus function elements in the claims below are intended to include any structure, material or act for performing the function in combination with other claimed elements are specifically claimed. The description of the present invention has been presented for purposes of illustration and description, but is not intended to be exhaustive or limited to the invention in the form disclosed. Many modifications and variations will be apparent to those of ordinary skill without departing from the scope and spirit of the invention. The embodiment was chosen and described in order to best explain the principles of the invention and the practical application, and to enable others of ordinary skill in the art to understand the invention for embodiments with various modifications as are suited to the particular use contemplated.

**Claims**

1. An ultrasonic impact grinding system (1100) comprising:

    an ultrasonic vibration tool (1) having a tool tip (4);

a slurry component having a slurry nozzle to deliver a slurry (20) having abrasive particles (24) in an area of the tool tip (4), wherein the tool tip (4) of the ultrasonic vibration tool (1) engages the abrasive particles (24) to machine a workpiece (23);

a physics-based model (1106) configured to optimize a material removal rate for a given particle size (1108) for the abrasive particles (24) and a vibration amplitude (208) according to a power level for the ultrasonic vibration tool (1), wherein the physics-based model (1106) receives at least one input parameter including a material property and a tool parameter; and

an adaptive profile control (1150) having an ultrasonic power generator to receive the vibration amplitude (208) and control the ultrasonic vibration tool (1) according to the vibration level and a vibration frequency.

2. The ultrasonic impact grinding system (1100) of claim 1, further comprising an adaptive feed rate control system to monitor a feed rate to the ultrasonic vibration tool (1) based on the vibration amplitude (208).

3. The ultrasonic impact grinding system (1100) of claim 2, wherein the feed rate is provided to the physics-based model (1106) to update an attribute related to the power level.

4. The ultrasonic impact grinding system (1100) of claim 2 or 3, wherein the adaptive feed rate control system includes a controller (809) to control the feed rate to the ultrasonic vibration tool (1).

5. The ultrasonic impact grinding system (1100) of any preceding claim, wherein the physics-based model (1106) is configured to determine an ultrasonic impact grinding power based on the vibration amplitude (208).

6. The ultrasonic impact grinding system (1100) of claim 5, further comprising a controller (809) to control the power level to the ultrasonic vibration tool (1) using the ultrasonic impact grinding power as a starting point.

7. The ultrasonic impact grinding system (1100) of any preceding claim, further comprising an on-machine tool measurement system to measure a tool length of the tool tip (4) of the ultrasonic vibration tool (1),
wherein, optionally, the tool length is provided to the physics-based model (1106).

8. The ultrasonic impact grinding system (1100) of any preceding claim, further comprising load sensors (1124) to provide a load profile of operations by the ultrasonic vibration tool (1) according to the vibration amplitude (208).
wherein, optionally, the load profile is provided to the physics-based model (1106).

9. A method comprising:

receiving at least one input parameter for an ultrasonic impact grinding system (1100), wherein the input parameter includes a material property of a workpiece (23) and a tool parameter;
applying a physics-based model (1106) to the at least one input parameter;
estimating a vibration amplitude (208) to optimize a power level to an ultrasonic vibration tool (1) of the ultrasonic impact grinding system (1100) to be used with the ultrasonic vibration tool (1); and
providing the power level to an adaptive profile control (1150) for the ultrasonic vibration tool (1).

10. The method of claim 9, further comprising monitoring an actual power output of the ultrasonic vibration tool (1).

11. The method of claim 10, further comprising adjusting a feed rate provided by the adaptive profile control (1150) to the ultrasonic vibration tool (1) according to the actual power output.

12. The method of claim 10 or 11, further comprising providing the actual power to the physics-based model (1106), and, optionally, further comprising updating the physics-based model (1106) with the actual power output.

13. The method of any of claims 9 to 12, further comprising:

estimating the power level using a vibration frequency along with the vibration frequency; and/or
optimizing a material removal rate for a given particle size (1108) for abrasive particles (24) to be used with the ultrasonic vibration tool (1).

14. A method comprising:

providing an ultrasonic vibration tool (1) for impact grinding a workpiece (23) using a slurry (20) having abrasive particles (24) in an area of a tool tip (4) of the ultrasonic vibration tool (1);

providing electrical power having an electrical power level to the ultrasonic vibration tool (1) to induce vibration in the tool tip (4) in a direction (204) of the workpiece (23);

receiving an input signal corresponding the electrical power level;

applying a physics-based model (1106) to the input signal;

determining a desired vibration amplitude (208) of a power level of the ultrasonic vibration tool (1) based on the input signal; and

using the desired vibration amplitude (208) to control the electrical power level to the ultrasonic vibration tool (1).

**15.** The method of claim 14, further comprising:

using the control desired vibration amplitude (208) to control the rate of speed that the workpiece (23) is moved pass the vibration tool (1); and/or

adaptively controlling the feed rate of the vibrating tool (1).

FIG. 1

FIG. 2

FIG. 3

FIG. 4A

FIG. 4B

FIG. 4C

FIG. 5

FIG. 6

FIG. 7

FIG. 8

FIG. 9

FIG. 10

EP 4 640 368 A1

# FIG. 11

1100

Physics-Based Model Module — 1104

Particle Size — 1108

Cutting Load — 1105

Input Parameters — 1102

Material Properties — 1102A

Physics-Based Model — 1106

Feature and Tool Geometries — 1102B

Amplitude Estimation — 1110

Process Path and Cutting Conditions — 1102C

Ultrasonic System

CNC Controller — 809

Load Sensors — 1124

Adaptive Profile Control — 1150

Ultrasonic Tool — 1

Workpiece — 23

Control Unit — 811

Data Labeling and Analytics — 1122

Ultrasonic Power Supply — 801

Process Optimization Based on Machine Learning — 1120

## EUROPEAN SEARCH REPORT

Application Number

EP 25 17 2070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 295 999 A1 (RTX CORP [US]) 27 December 2023 (2023-12-27) * paragraphs [0002], [0037], [0038], [0040] - [0046], [0049], [0050]; claims 1, 9; figures 1-3 * | 1-15 | INV. B24B1/04 |
| A | AU 2012 256 467 B2 (AGRESEARCH LTD [NZ]) 3 September 2015 (2015-09-03) * claims 1, 2, 4 * | 1-15 | |
| A | CN 101 990 485 A (BOEING CO) 23 March 2011 (2011-03-23) * the whole document * | 1-15 | |
| A | CN 109 079 591 A (GUANGZHOU HUIZHUAN TOOLS CO LTD; CONPROFE TECH GROUP CO LTD) 25 December 2018 (2018-12-25) * claims 1-6 * | 1-15 | |

TECHNICAL FIELDS SEARCHED (IPC)

B24B

The present search report has been drawn up for all claims

| Place of search | Date of completion of the search | Examiner |
|---|---|---|
| Munich | 18 September 2025 | Endres, Mirja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 2070

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | | Publication date | Patent family member(s) | | Publication date |
|---|---|---|---|---|---|
| EP 4295999 | A1 | 27-12-2023 | EP | 4295999 A1 | 27-12-2023 |
| | | | US | 2023191658 A1 | 22-06-2023 |
| AU 2012256467 | B2 | 03-09-2015 | AU | 2012256467 A1 | 14-11-2013 |
| | | | GB | 2504636 A | 05-02-2014 |
| | | | NZ | 592935 A | 29-11-2013 |
| | | | WO | 2012158049 A1 | 22-11-2012 |
| CN 101990485 | A | 23-03-2011 | AT | E535353 T1 | 15-12-2011 |
| | | | CN | 101990485 A | 23-03-2011 |
| | | | EP | 2197638 A1 | 23-06-2010 |
| | | | ES | 2376831 T3 | 20-03-2012 |
| | | | JP | 5478514 B2 | 23-04-2014 |
| | | | JP | 2011510831 A | 07-04-2011 |
| | | | US | 2009198369 A1 | 06-08-2009 |
| | | | WO | 2009099969 A1 | 13-08-2009 |
| CN 109079591 | A | 25-12-2018 | NONE | | |

EPO FORM P0459

For more details about this annex : see Official Journal of the European Patent Office, No. 12/82